# EUROPÄISCHE PATENTSCHRIFT

(11) **EP 4 381 386 B1**
(45) Veröffentlichungstag und Bekanntmachung des Hinweises auf die Patenterteilung: **30.04.2025**
(21) Anmeldenummer: 22792825.6
(22) Anmeldetag: 28.09.2022
(51) Int. Cl.: G06F 9/455, G06F 21/53, G06F 21/64

(54) **PRIORISIEREN EINES ZUGRIFFS VON EINER CONTAINERINSTANZ AUF EINE DATEI IN EINER DATEISYSTEMRESSOURCE**
PRIORITIZING OF ACCESS FROM A CONTAINER ENTITY TO A FILE IN A FILE SYSTEM RESOURCE
ÉTABLISSEMENT DE PRIORITÉ D'UN ACCÈS À PARTIR D'UNE INSTANCE DE CONTENEUR À UN FICHIER DANS UNE RESSOURCE DE SYSTÈME DE FICHIERS

(30) Priorität: 19.10.2021 EP 21203473
(43) Veröffentlichungstag der Anmeldung: 12.06.2024
(73) Patentinhaber: Siemens Aktiengesellschaft, 80333 München (DE)
(72) Erfinder: KNIERIM, Christian, 81373 München (DE)
(74) Vertreter: Siemens Patent Attorneys
(86) Internationale Anmeldenummer: PCT/EP2022/076954
(87) Internationale Veröffentlichungsnummer: WO 2023/066627

(56) Entgegenhaltungen:
- CN-A- 112 580 086
- US-A1- 2020 326 984
- SIEMENS AG CHRISTIAN KNIERIM DE-MÜNCHEN ET AL: "Definition und Überprüfung von Komplexitätsregeln für vertrauliche Informationen in Container-Instanzen", PRIOR ART PUBLISHING GMBH, PRIOR ART PUBLISHING GMBH, MANFRED-VON-RICHTHOFEN-STR. 9, 12101 BERLIN GERMANY, vol. www.priorartregister.com, 15 July 2021 (2021-07-15), pages 1 - 5, XP007024163

## Beschreibung

Die Erfindung betrifft Verfahren zum Verfahren zum Priorisieren eines Zugriffs von einer Containerinstanz auf eine Datei in einer Dateisystemressource.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene SW-Applikation vom darunterliegenden Hostsystem ab. SW-Applikationen bzw. die durch SW-Applikationen bereitgestellten Dienste werden mittlerweile in vielen Bereichen wie beispielsweise der Industrieautomation und der Prozesssteuerung, aber auch für Anwendungen in Transportsystemen oder Fahrzeugen mittels Container implementiert.

Um einen Container auf dem Hostsystem starten zu können, wird ein Containerabbild, im weiteren auch Containerimage genannt, benötigt, welches neben der Applikationssoftware auch die für die Applikationssoftware erforderlichen Binärprogramme und Bibliotheken enthält. Aus dem Containerabbild wird auf dem Hostsystem ein Container, genauer eine Containerinstanz, erstellt und auf der Laufzeitumgebung ausgeführt. Bei Bedarf, beispielsweise bei einem verstärkten Aufruf der Applikation durch Nutzer, können aus dem gleichen Containerimage weitere Containerinstanzen auf dem gleichen oder einem anderen Hostsystem erzeugt und ausgeführt werden.

Herkömmlicherweise werden Containerinstanzen mit Hilfe einer Container-Laufzeitumgebung wie beispielsweise "Docker" im Betriebssystem des Hostsystems, das gegebenenfalls auch als virtualisierte Hardware-Ressourcen ausgebildet ist, betrieben. Dateien oder auch Dateisystembereiche auf einer vom Hostsystem bereitgestellten Speicherressource, auf die die Containerinstanz bzw. ein in der Containerinstanz ausgeführter Prozess zugreifen möchte, werden der Containerinstanz beispielsweise beim Start zugewiesen und Zugriffsberechtigungen auf diese Dateien zugewiesen.

Das Betriebssystem des Hostsystems steuert mit den für die Datei zugewiesenen Zugriffsberechtigungen, welche Prozesse auf diese Datei Zugriff erhalten. Dabei können mehrere Containerinstanzen des gleichen Containerimages auf einem Hostsystem parallel betrieben werden und auch parallel auf die der jeweiligen Containerinstanz zugeordneten Datei zugreifen. Auch Containerinstanzen unterschiedlicher Containerimages können die gleiche Datei verwenden. In beiden Fällen ist es zudem in vielen Fällen erforderlich, dass Schreibzugriffe auf die Datei serialisiert werden. Sobald Schreibvorgänge auf die Datei stattfinden, muss sichergestellt sein, dass ein schreibender Prozess die Zugriffe für den gewünschten Zeitraum exklusiv durchführt.

CN 112 580 086 A beschreibt ein Zugriffsschutzverfahren für eine Konfigurationsdatei. Das Zugriffsverfahren wird isoliert von einer Anwendung in einem Container ausgeführt. Um Konflikte zwischen mehreren Schreibanforderungen auf die Konfigurationsdatei zu vermeiden, werden die Schreibanfragen gemäß einem vorbestimmten Warteschlangenmechanismus bspw. in der Reihenfolge des Zugangs der Schreibanforderung oder gemäß einer Priorität der Schreibanforderung in die Anforderungs-Warteschlange eingehängt. Anschließend werden sequenziell die Anforderungsparameter aus jeder Schreibanforderung in der Warteschlange in die Konfigurationsdatei geschrieben.

SIEMENS AG CHRISTIAN KNIERIM DE-MÜNCHEN ET 1-15 AL: "Definition und Überprüfung von Komplexitätsregeln für vertrauliche Informationen in Container-Instanzen", PRIOR ART PUBLISHING GMBH, PRIOR ART PUBLISHING GMBH, MANFRED-VON-RICHTHOFEN-STR. 9, 12101 BERLIN GERMANY, Bd. www.priorartregister.com, 15. Juli 2021 (2021-07-15), Seiten 1-5, XP007024163, beschreibt ein Verfahren zur Überprüfung von Komplexitätsanforderungen bzw. Komplexitätsregeln für vertrauliche Informationen, das die Kritikalität eines Laufzeitparameters automatisch erkennt und aufgrund dieser Erkennung Komplexitätsüberprüfungen durchführt.

US 2020/326984 A1 offenbart ein Docker-Container-orientiertes Verfahren zur Isolation von Dateisystem-Ressourcen. Das Verfahren verwendet einen Isolations-bezogenen "Lock"-Wettbewerb in geteilten Betriebssystemkernen und einen Wettbewerb für Dateisystem-Ressourcen, der Gast-Dateisystem-Ressourcen gemäß Zugangsanfragen von Containern allokierten und Lock-Ressourcen entsprechend der Zugriffsanfragen überprüft.

Es besteht somit der Bedarf an einer Lösung, die sicherstellt, dass die schreibende Ressourcennutzung einer Gerätedatei für einzelne Instanzen oder Container-Images serialisiert wird und abhängig von deren Vertrauensgrad bzw. Eigenschaften eingeschränkt, verzögert oder priorisiert wird. Sofern eine Container-Instanz im schlimmsten Fall eine Gerätedatei über die erlaubte Dauer blockiert oder auf diese dauerhaft zugreift, soll zudem sichergestellt sein, dass eine solche Instanz beendet wird.

Es ist somit eine Aufgabe der vorliegenden Erfindung, ein Verfahren zu schaffen, das sicherstellt, dass die schreibende Ressourcennutzung einer Datei für einzelne Containerinstanzen oder Containerimages serialisiert wird und abhängig von deren Eigenschaften eingeschränkt, verzögert oder priorisiert wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Priorisieren eines Zugriffs von einer Containerinstanz auf eine Datei in einer Dateisystemressource, umfassend
- Empfangen, in einer Laufzeitumgebung der Containerinstanz, einer Zugriffsanfrage für den Zugriff von der Containerinstanz auf die Datei, wobei die Zugriffsanfrage eine Zugriffskennung enthält, die mindestens eine Eigenschaft der zugreifende Containerinstanz kennzeichnet,
- Überprüfen der mindestens einen Eigenschaft in der Zugriffskennung gegenüber einer Zugriffsrichtlinie, die eine Priorisierungsstufe für den Zugriff auf mindestens die eine Datei abhängig von den Eigenschaften der Zugriffskennung umfasst, durch eine Zugriffssteuereinheit in der Containerlaufzeitumgebung, und
- Zuweisen einer Zugriffsberechtigung mit einer Priorisierungsstufe zur Zugriffsanfrage abhängig von dem Überprüfungsergebnis,
- Weiterleiten der Zugriffsanfrage an die Datei abhängig von der zugewiesenen Priorisierungsstufe.

Dies ermöglicht es für die Containerinstanz spezifische Zugriffsberechtigungen auf die Datei einzurichten und durchzusetzen. Die Zugriffskennung kann als Label, d.h. als Sprungmarke ausgebildet sein. Die die Eigenschaften in der Zugriffskennung können in einem mit der Sprungmarke gekennzeichneten Speicherbereich abgespeichert und für die Überprüfung bereitgestellt werden. Über die Zugriffsrichtlinie können Priorisierungsstufen, die eine Abarbeitungsreihenfolge für den Zugriff auf die Datei angeben, an die Eigenschaften der Containerinstanz geknüpft werden. Somit können flexibel Zugriffsberechtigungen vergeben und durchgesetzt werden.

In einer vorteilhaften Ausführungsform ist die Datei eine Gerätedatei, die Steuerungsbefehle von der Containerinstanz empfängt und diese an eine von der Containerinstanz steuerbare Hardware-Ressource zur Ausführung weitergibt.

Die Hardware-Ressource wird beispielsweise beim Start der Containerinstanz durch eine Konfigurationsdatei der Containerinstanz zugewiesen. Die Hardware-Ressource wird im Weiteren auch als Gerät bezeichnet. Sobald Prozesse in der Containerinstanz Steuerungsbefehle an ein Gerät übermitteln möchten, übergibt die Containerinstanz die Steuerungsbefehle an die Gerätedatei, die auf dem Dateisystem erzeugt wurde. Die Gerätedatei gibt die Steuerungsbefehle an einen Controller weiter, der diese in Gerätespezifische Steuerungskommandos übersetzt. Somit kann durch die Zugriffskennung der Containerinstanz in der Zugriffsanfrage eine priorisierte Zugriffsberechtigung spezifisch für die Containerinstanz auf das Gerät bereitgestellt werden.

In einer vorteilhaften Ausführungsform wird die Zugriffskennung spezifisch für die Containerinstanz erstellt. Alternativ wird die Zugriffkennung spezifisch für das Containerimage erstellt und die Containerimage-spezifische Zugriffskennung jeder aus dem Containerimage erzeugten Containerinstanz zugeordnet.

Somit kann eine Priorisierung der Zugriffsberechtigung spezifisch für jede einzelne Containerinstanz eingerichtet werden. Wird die Zugriffskennung spezifisch für ein Containerimage erstellt, können in einfacher Weise die gleichen Zugangsberechtigungen für alle aus dem Containerimage erstellten Containerinstanzen definiert und durchgesetzt werden.

In einer vorteilhaften Ausführungsform werden die Priorisierungsstufen für den Zugriff der zugreifenden Containerinstanz auf die Hardware-Ressource durch einen Betreiber der Hardware-Ressource vorgegeben.

Somit kann der Betreiber der HW-Ressource bzw. des zugeordneten Geräts, das nicht notwendigerweise ein integraler Bestandteil des Hostsystems ist, auf erlaubte Zugriffsrechte zugreifende Containerinstanzen Einfluss nehmen.

In einer vorteilhaften Ausführungsform ist eine Eigenschaft in der Zugriffskennung mindestens eines aus einer Auswahl aus: einem Namen der Zugriffskennung, einer Signatur der zugreifenden Containerinstanz, einer Signatur des Containerimages, aus dem die zugreifenden Containerinstanz erzeugt wird, und/oder ein Name des Containerimages.

Durch die Signatur der Containerinstanz oder des Containerimages kann ein Vertrauensgrad abgeleitet werden. Jeder Eigenschaft der Auswahl kann über die Zugriffsrichtlinie eine Priorisierungsstufe für die Zugriffsberechtigung auf die Datei bzw. Gerätedatei zugeordnet werden. Somit können Zugriffsberechtigungen flexibel an unterschiedliche Eigenschaften geknüpft werden.

In einer vorteilhaften Ausführungsform ist der Containerinstanz mindestens eine Netzwerkschnittstelle zugeordnet, und die Zugriffskennung enthält eine Kennung für jede der mindestens einen zugeordneten Netzwerkschnittstellen.

Somit kann eine priorisierte Zugriffsberechtigung abhängig von der Zugehörigkeit der Containerinstanz zu einer Netzwerkschnittstelle erfolgen.

In einer vorteilhaften Ausführungsform wird die Kennung der zugeordneten Netzwerkschnittstelle durch einen Betreiber der Containerlaufzeitumgebung der Netzwerkschnittstelle zugeordnet.

Somit kann der Betreiber der Containerlaufzeit den Zugriff von einer Containerinstanz auf die Netzwerkschnittstelle steuern.

In einer vorteilhaften Ausführungsform umfasst die Zugriffsrichtlinie eine Priorisierungsstufe für jede der Kennungen der Netzwerkschnittstellen.

Somit kann der Priorisierungsgrad der Zugriffsberechtigung feingranular abhängig von jeder einzelnen Netzwerkschnittstelle eingerichtet werden.

In einer vorteilhaften Ausführungsform wird diejenige Priorisierungsstufe, die der ersten in der Zugriffskennung enthaltenen Eigenschaft in der Zugriffsrichtlinie zugeordnet ist, der Zugriffsanfrage zugewiesen.

Sind beispielsweise mehrere Netzwerkschnittstellen einer einzigen Containerinstanz zugeordnet wird, die Prioritätsstufe für den Zugriff auf die Gerätedatei durch die in der Zugriffskennung zuerst genannte Netzwerkschnittstelle vorgegeben. Somit kann durch eine gezielte Reihenfolge der Eigenschaften in der Zugriffskennung die Prioritätsstufe für den Zugriff auf die Gerätedatei vorgegeben werden.

In einer vorteilhaften Ausführungsform wird die höchste Priorisierungsstufe aus allen Prioritätsstufen, die den in der Zugriffskennung enthalten Eigenschaften zugeordnet sind, der Zugriffsanfrage zugewiesen.

Dies ermöglicht eine alternative Interpretation der Zugriffskennung.

In einer vorteilhaften Ausführungsform umfasst die Zugriffsrichtlinie für jede der mindestens einen Datei einen Namen der Datei und mindestens eine Eigenschaft aus einer Auswahl der nachfolgenden Eigenschaften: einem Namen der Zugriffskennung, einer Signatur der zugreifenden Containerinstanz, einer Signatur des Containerimages, aus dem die zugreifenden Containerinstanz erzeugt wird, ein Name des Containerimages oder eine Kennung für eine Netzwerkschnittstelle, und mindestens einer der Eigenschaften aus der Auswahl eine Priorisierungsstufe zugeordnet ist.

Die Eigenschaften sind in der Zugriffsrichtlinie einer Priorisierungsstufe zugeordnet. Ist der Kennung einer Netzwerkschnittstelle der Containerinstanz eine hohen Prioritätsstufe zugeordnet, so wird die Zugriffsanfrage bevorzugt behandelt im Vergleich eine Zugriffsanfrage von einer Containerinstanz, deren Netzwerkschnittstelle einer niedrige Priorisierungsstufe zugeordnet ist.

In einer vorteilhaften Ausführungsform umfasst die Zugriffsrichtlinie für jede der mindestens einen Datei mindestens eine Angabe aus einer Auswahl aus: einen Prozessnamen zu einem über die Zugriffsanfrage angefragten Prozess, einem Zugriffsmodus, einer maximalen Zugriffsdauer, bevorzugt abhängig von den Eigenschaften der Zugriffskennung.

Es kann in der Zugriffsrichtlinie somit für jede Datei der Zugriffsmodus angegeben werden, d.h. ob auf die HW-Ressource parallel schreibend oder exklusiv, d.h. seriell schreibend zugegriffen werden darf. Sofern parallel schreibend zugegriffen werden darf, kann eine Anzahl maximal parallel stattfindender Schreibaktionen definiert werden. Der Zugriffsmodus gibt beispielsweise an, ob ein paralleler Zugriff lediglich durch Containerinstanzen des gleichen Containerimages oder durch Containerinstanzen von unterschiedlichen Containerimages erlaubt sind.

In einer vorteilhaften Ausführungsform ist die Zugriffssteuereinheit als ein Erweiterungsmodul in der Containerlaufzeitumgebung oder als eine von der Containerlaufzeit getrennte eigenständige Einheit ausgebildet.

Durch die Ausbildung der Zugriffssteuereinheit als Erweiterungsmodul kann die Priorisierung der Zugriffsberechtigungen schnell auf dem Hostsystem ausgeführt werden. Durch die Ausbildung der Zugriffssteuereinheit als eigenständige Einheit ist der Prozesse besser von der Containerlaufzeitumgebung abgekapselt und kann auch von weiteren parallellaufenden Laufzeitumgebungen eingebunden werden. Alternativ kann die Zugriffssteuereinheit über ein zentrales Deployment-System, beispielsweise mit Hilfe eines Orchestrators, auf alle vom Orchestrator verwalteten Systeme verteilt werden.

Ein zweiter Aspekt der Erfindung betrifft eine Vorrichtung zum Priorisieren eines Zugriffs von einer Containerinstanz auf eine Datei in einer Dateisystemressource, umfassend eine Laufzeitumgebung einer Containerinstanz, die derart ausgebildet ist
- eine Zugriffsanfrage für den Zugriff von der Containerinstanz auf die Datei zu empfangen, wobei die Zugriffsanfrage eine Zugriffskennung enthält, die mindestens eine Eigenschaft der zugreifende Containerinstanz kennzeichnet,
- die mindestens eine Eigenschaft in der Zugriffskennung gegenüber einer Zugriffsrichtlinie, die eine Priorisierungsstufe für den Zugriff auf mindestens die eine Datei abhängig von den Eigenschaften der Zugriffskennung umfasst, durch eine Zugriffssteuereinheit, in der Containerlaufzeitumgebung zu über-prüfen, und
- eine Zugriffsberechtigung mit der Priorisierungsstufe zur Zugriffsanfrage abhängig von dem Überprüfungsergebnis zuzuweisen, und
- die Zugriffsanfrage abhängig von der zugewiesenen Priorisierungsstufe an die Datei weiterzuleiten.

Durch die erfindungsgemäße Vorrichtung können mehrere Containerinstanzen gleichzeitig auf die gleiche Datei zugreifen und priorisiert werden.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "über-prüfen", "zuweisen", "weiterleiten", und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Die Vorrichtung und die darin enthaltene Laufzeitumgebung, kann einen oder mehrere Prozessoren umfassen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Systems ausgebildet als Hostsystem mit einer Laufzeitumgebung in schematischer Darstellung;
- Fig. 2: ein Ausführungsbeispiel des erfindungsgemäßen Verfahrens als Ablaufdiagramm;
- Fig. 3: ein Ausführungsbeispiel einer erfindungsgemäßen Zugriffskennung in schematischer Darstellung; und
- Fig. 4: ein Ausführungsbeispiel der erfindungsgemäßen Zugriffsrichtlinie in schematischer Darstellung.

Einander entsprechende Teile sind in allen Figuren mit den gleichen Bezugszeichen versehen.

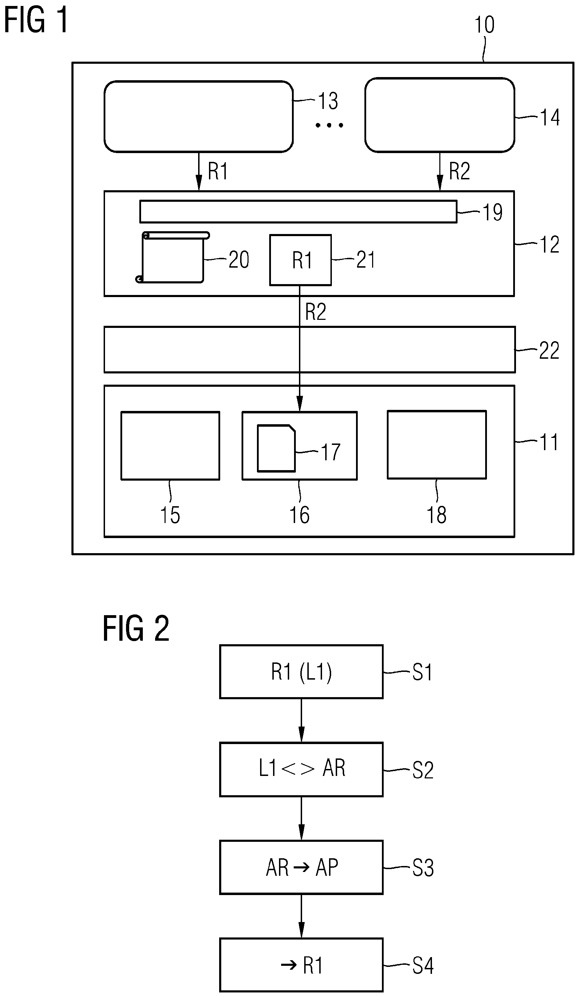

Anhand von Figur 1 werden die einzelnen Komponenten des erfindungsgemäßen Systems und ein Zusammenspiel von Containerinstanz und Zugriff auf eine der Containerinstanz zugeordneten Datei aufgezeigt.

Figur 1 zeigt ein System 10, das HW-Ressourcen 11, ein Betriebssystem mit einer Containerlaufzeitumgebung 12 sowie zwei auf der Containerlaufzeitumgebung 12 ausgeführte Containerinstanzen 13, 14. HW-Ressourcen 11 sind beispielsweise ein Steuergerät 15, eine Speichereinheit 16 oder eine physisch im System ausgebildete Netzwerkschnittstelle 18. Die Netzwerkschnittstelle kann auch als eine virtuelle Netzwerkschnittstelle ausgebildet sein. Die physische als auch die virtuelle Netzwerkschnittstelle werden über den Betriebssystemkernel 22 angesprochen. Eine Datei 17 ist in einem Dateisystem in der Speichereinheit 16 gespeichert. Die Datei 17 wird der Containerinstanz 13 zugewiesen und damit zugreifbar, indem die Datei 17 mittels eines beispielsweise "Bind-Mount" Befehls in einen Mount-Namensraum der Containerinstanz 13, auch "mount namespace" genannt, oder durch Teilen eines anderen Mount-Namensraums, welcher die Datei 17 aufweist, eingebunden.

Möchte die Containerinstanz 13 beziehungsweise ein auf der Instanz ausgeführter Prozess auf eine Datei 17 zugreifen, steuert das Betriebssystem bzw. die Containerlaufzeitumgebung 12 anhand von Zugangsberechtigungen, welche Prozesse auf die Datei Zugriff erhalten.

Werden mehrere Containerinstanzen des gleichen Containerimages auf einem Hostsystem parallel betrieben, so greifen herkömmlicherweise diese Containerinstanzen auch parallel auf die in jeder der Containerinstanzen zugeordnete Datei zu. Dies ist im Besonderen der Fall, wenn Orchestrierungslösungen wie Kubernetes eine Überlastsituation für bereits betriebene Containerinstanzen erkennen und diese hochskalieren, d.h. weitere Containerinstanzen aus dem gleichen Containerimage erzeugen und starten. Werden zu viele Containerinstanzen gestartet, kann es sein, dass durch die Hochskalierung zu viele Zugriffe auf die Datei übergeben werden und dieser nicht mehr korrekt abgearbeitet werden.

Auch können Containerinstanzen unterschiedlicher Containerimages die gleiche Datei verwenden und führen unterschiedliche Aufgaben auf dem gleichen Controller aus. Diese Containerimages können auch von unterschiedlichen Herstellern bereitgestellt werden und haben nicht immer das gleiche Vertraulichkeitslevel. Handelt es sich bei der Datei 17 um eine Gerätedatei, die Steuerbefehle von der Containerinstanz 13 empfängt und diese an eine von der Containerinstanz 13 steuerbare Hardware-Ressource 11, beispielsweise das Steuergerät 15 zur Ausführung weitergibt, so kann in einem herkömmlichen System eine bösartige Containerinstanz durch permanentes Schreiben auf die Gerätedatei ein mit der Gerätedatei verbundenes Steuergerät 15 derart beanspruchen, dass beispielsweise für die Betriebssicherheit relevante Steuerungssignale anderer Containerinstanzen nicht mehr abgesetzt werden können und somit die Sicherheit des Hostsystems oder einer Anlage in der die Containerinstanz über eine Cloud-basiertes Hostsystem betrieben wird, gefährdet ist.

In beiden Fällen ist es zudem häufig erforderlich, dass Schreibzugriffe auf die Datei serialisiert werden, d.h. dass Schreibvorgänge zeitlich hintereinander und nicht gleichzeitig ausgeführt werden.

Eine grundlegende Idee besteht darin, dass Containerinstanzen 13, 14 gewisse Eigenschaften aufweisen, und der Zugriff auf eine Datei 17 abhängig von einer oder mehreren dieser Eigenschaften priorisiert wird.

Das erfindungsgemäße Verfahren zum Priorisieren des Zugriffs von einer Containerinstanz, beispielsweise Containerinstanz 13 auf eine Datei, beispielweise die Datei 17, in einer Dateisystemressource, beispielsweise Speichereinheit 16, wird in Fig. 2 dargestellt.

In einem ersten Verfahrensschritt S1 empfängt die Laufzeitumgebung 12 der Containerinstanz 13 eine Zugriffsanfrage R1 für den Zugriff von der Containerinstanz 13 auf die Datei 17. Die Zugriffsanfrage enthält eine Zugriffskennung L1, die mindestens eine Eigenschaft der zugreifende Containerinstanz 13 angibt. Die Datei 17 kann jede beliebige Art von Datei sein, insbesondere aber auch eine Gerätdatei sein. Die Zugriffskennung L1 wird spezifisch für die Containerinstanz 13 erstellt, sodass jeder Containerinstanz 13 eine eigene, beispielsweise eindeutige Zugriffskennung L1 zugeordnet ist. Die Zugriffskennung L1 kann auch spezifisch für das Containerimage erstellt werden, sodass jeder Containerinstanz, die aus dem gleichen Containerimage erzeugt wurde, die gleiche Containerimage-spezifische Zugriffskennung zu geordnet wird.

Im nächsten Verfahrensschritt S2 wird die mindestens eine Eigenschaft in der Zugriffskennung L1 gegenüber einer Zugriffsrichtlinie 20, AR überprüft und eine Priorisierungsstufe für den Zugriff auf die Datei 17 abhängig von den Eigenschaften der Zugriffskennung L1 anhand der Zugriffsrichtline 20, AR durch eine Zugriffssteuereinheit 19 in der Containerlaufzeitumgebung 12 ermittelt. Anschließend wird der Zugriffsanfrage R1 eine Zugriffsberechtigung mit der aus der Überprüfung resultierenden Priorisierungsstufe AP zugewiesen, siehe Verfahrensschritt S3. Die Zugriffsanfrage R1 wird entsprechend der Priorisierungsstufe AP zur Übergabe an die Datei 17 beispielsweise in eine Warteschlange 21, eingeordnet. Anschließend wird
die Zugriffsanfrage R1 an die Datei 17 abhängig von der zugewiesenen Priorisierungsstufe AP weitergeleitet.

Ist die Datei 17 eine Gerätedatei, kann die Priorisierungsstufe AP für den Zugriff auf die durch die Gerätedatei ansprechbare Hardware-Ressource, beispielsweise das Steuergerät 15 durch einen Betreiber der Hardware-Ressource, somit dem Hersteller des Steuergeräts 15, vorgegeben werden.

Die Zugriffssteuereinheit 19 ist als ein Erweiterungsmodul der Containerlaufzeitumgebung 12 im System 10 oder als eine von der Containerlaufzeit getrennte eigenständige Einheit ausgebildet. Das System 10 mit der Laufzeitumgebung 12 ist derart ausgebildet das beschriebene Verfahren auszuführen.

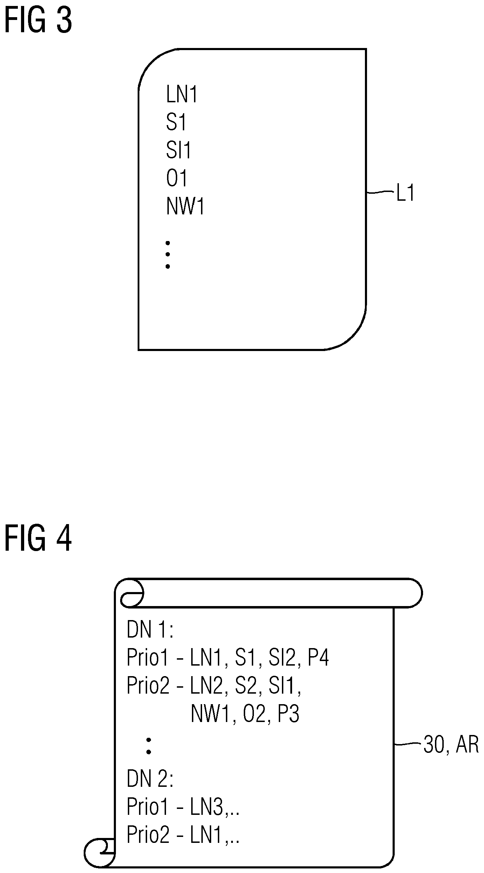

In Fig. 3 ist ein Ausführungsbeispiel für die Zugriffskennung L1 dargestellt. Die Zugriffskennung L1 der Containerinstanz 13 umfasst mindestens eine der Eigenschaften der Containerinstanz 13. Eigenschaften können dabei insbesondere ein Name LN1 der Zugriffskennung L1, eine Signatur S1 der Containerinstanz 13, einer Signatur SI1 des Containerimages, aus dem die zugreifenden Containerinstanz 13 erzeugt wird oder ein Name O1 des Containerimages sein. Sind der Containerinstanz 13 eine oder mehrere Netzwerkschnittstelle zugeordnet, kann die Zugriffskennung eine Kennung NW1 für jede der zugeordneten Netzwerkschnittstellen umfassen. Die Kennung NW1 wird vorzugsweise durch einen Betreiber der Containerlaufzeitumgebung 12 der Netzwerkschnittstelle zugeordnet.

Fig. 4 zeigt ein Ausführungsbeispiel einer Zugriffsrichtlinie 30, AR. Die Zugriffsrichtlinie 30, AR umfasst für jede der mindestens einen Datei 17 einen Namen DN1, DN2 der jeweiligen Datei und mindestens eine Eigenschaft der zum Zugriff berechtigten Containerinstanzen. Des Weiteren umfasst die Zugriffsrichtlinie mindestens eine Priorisierungsstufe Prio1, Prio2. Der mindestens einen Priorisierungsstufe Prio1, Prio2 sind Eigenschaften entsprechend den in den Zugriffskennungen enthaltenen Eigenschaften zugeordnet. Die in der Zugriffskennung L1 enthaltenen Eigenschaften werden somit gegenüber den Eigenschaften in der Zugriffsrichtlinie 30, AR überprüft. Diejenige Priorisierungsstufe Prio1, Prio2, die der ersten in der Zugriffskennung enthalten Eigenschaft zugeordnet ist, wird der Zugriffsanfrage zugewiesen. Bei diesem auch First-Hit-Verfahren bezeichneten Vorgehen wird für eine Datei, für die der schreibende Zugriff reglementiert werden soll, die Priorisierungsstufe Prio1, Prio2 verwendet, die auf die erste Eigenschaft in der Zugriffskennung der Containerinstanz zutreffen. Alternativ kann auch die höchste Priorisierungsstufe über alle in der Zugriffskennung genannten Eigenschaften der Zugriffsanfrage zugewiesen werden.

Figur 4 zeigt Eine Auswahl möglicher Eigenschaften in der Zugriffsrichtlinie sind: ein Name LN1 der Zugriffskennung L1, einer Signatur S1 der zugreifenden Containerinstanz 13, einer Signatur des Containerimages SI1, aus dem die zugreifenden Containerinstanz erzeugt wird, ein Name O1 des Containerimages oder eine Kennung NW1 für eine Netzwerkschnittstelle. Jede Eigenschaft ist einer Priorisierungsstufe zugeordnet. Die Zugriffsrichtlinie 20, AR umfasst für jede der mindestens einen Datei 17 umfasst bevorzugt des Weiteren mindestens eine Angabe aus: einem Prozessnamen zu einem über die Zugriffsanfrage angefragten Prozess P3, P4 der Containerinstanz, einem Zugriffsmodus, einer maximalen Zugriffsdauer, bevorzugt abhängig von den Eigenschaften der Zugriffskennung oder abhängig vom jeweiligen Prozess. Es kann für jede Datei 17 angegeben werden, ob auf sie parallel schreibend oder exklusiv schreibend zugegriffen werden darf. Sofern parallel schreibend zugegriffen werden darf, kann eine Anzahl maximal parallel stattfindender Schreibaktionen definiert werden.

Durch die Netzwerkschnittstellenkennung NW1 besteht die Möglichkeit, dass die Priorisierung der Zugriffe auf die Datei 17 über die Zugehörigkeit der Containerinstanz zu einer Netzwerkschnittstelle, auch network bridge genannt, erfolgt. Mit Hilfe von Netzwerkschnittstellen ist es möglich, Containerinstanzen netzwerkseitig zu segmentieren. Über die Zugriffsrichtlinie 20, 30, AR kann somit sichergestellt werden, dass Containerinstanzen, die in einem kritischeren Datennetzwerk betrieben werden, höher priorisiert werden können.

Ist eine Containerinstanz mit mehreren Netzwerkschnittstellen verbunden, muss in der Zugriffsrichtline 20, 30, AR ebenfalls definiert werden, ob die Regeln der Netzwerkschnittstelle mit der niedrigsten Priorisierungsstufe oder die Regeln der Netzwerkschnittstelle mit der höchsten Prioritätsstufe verwendet werden. Hierfür müssen die Netzwerkschnittstellen beim Anlegen entsprechend von einem Betreiber einer HW-Ressource, die über die Netzwerkschnittstelle angesprochen wird bzw. von einem Konfigurator der in der Containerinstanz ausgeführten Applikation priorisiert werden. Dies ist über eine Definition der Priorität der Zugriffskennungen, bzw. den Eigenschaften innerhalb der Zugriffsrichtline und/oder die Reihenfolge der Eigenschaften in der Zugriffskennung möglich.

Gleiches gilt auch für Containerinstanzen oder Containerimages, deren Zugriffskennung mehrere Eigenschaften des gleichen Typs, beispielsweise mehrere Signaturen enthält.

Die Zugriffsrichtlinie 20, AR wird von einer Zugriffssteuerungseinheit 19, siehe Fig. 1, welche als Erweiterung der Container-Laufzeitumgebung 12 oder als eigenständige Komponente realisiert ist, interpretiert. Die Zugriffsteuerungseinheit 19 ist derart ausgebildet bei einer Zugriffsanfrage R1 von einem Prozess der Containerinstanz 13 auf die Datei 17 auf Basis der Zugriffsrichtlinie 20, 30 automatisch ein Überwachungsprogramm zu erstellen, das beispielsweise über eine erweiterte Berkeley Packet Filter (eBPF)-Schnittstelle eines Betriebssystemkernels 22 einen Alarm generiert und an die Überwachungskomponente in der Zugriffssteuerungseinheit 19 übermittelt. Der Prozess wird zunächst mit Hilfe eines eBPF-Programms temporär unterbrochen und ausgesetzt, mit anderen Worten schlafen gelegt.

Die Zugriffsteuerungseinheit 19 überprüft zunächst, ob der Prozess zu einer Containerinstanz gehört, für die der Zugriff erlaubt wurde. Um zu ermitteln, ob ein Prozess zu der Containerinstanz 13 gehört, kann die Zugriffsteuerungseinheit 19 entweder mit der Container-Laufzeitumgebung 12 über eine Kommunikationsschnittstelle, beispielsweise einem Docker-Socket, interagieren. Alternativ kann die Zugriffsteuerungseinheit 19 in der Container-Laufzeitumgebung 12 gestartete Prozess-Namespace registrieren und weitere in diesem Prozess-Namespace gestartet Prozesse beispielsweise mittels eBPF Programme überwachen.

Bei Empfang einer Zugriffsanfrage auf die Datei 17 oder beim Start der Containerinstanz 13 ermittelt die Zugriffssteuerungseinheit 19 weitere Informationen wie Kennzeichen, die zu einer Netzwerkschnittstelle, einem Containerimage oder einer Containerinstanz gehören. Die Zugriffssteuerungseinheit 19 fragt diese Informationen der Containerlaufzeitumgebung 12, beispielsweise über das Docker-Socket oder entsprechende Programmierschnittstellen, ab. Die Zugriffssteuerungseinheit 19 ermittelt des Weiteren mit welchen Schnittstellen eine der Containerinstanz 13 zugeordnete Netzwerkwerkschnittstelle 18 verbunden ist. Dies wird vorab beim Hinzufügen und Entfernen von Netzwerkschnittstellen ermittelt. Sofern die relevanten Eigenschaften wie Containerimagename oder Signatur vor dem Zugriff auf die Datei 17 ermittelt werden, beispielsweise beim Start und bei Änderungen bzw. einem Stopp der Containerinstanz 13, werden die in der Zugriffsrichtlinie 20 hinterlegten Parameter für jede Containerinstanz in der Zugriffssteuerungseinheit 19 zwischengespeichert.

Die Ermittlung der Signaturinformationen des Containerimages, welches zu einer Containerinstanz 13 gehört, erfolgt entweder über die Zugriffssteuereinheit 19 direkt, indem diese auf die gecachten Images und die Signaturdaten der Containerlaufzeitumgebung 12 direkt zugreift und diese selbst durchführt oder die entsprechenden Informationen über entsprechende Schnittstellenkommandos aus der Containerlaufzeitumgebung 12 ausliest und darauf vertraut wird, dass diese eine korrekte Überprüfung durchführen kann.

Ist die Datei 17 exklusiv nutzbar oder die Anzahl der maximalen parallel schreibenden Prozesse nicht erreicht, teilt die Zugriffssteuerungseinheit 19 dem Betriebssystem, insbesondere einem Betriebssystem-Kernel 22 über die eBPF-Schnittstelle mit, dass der von ihr schlafengelegte Prozess ausgeführt werden darf. Sobald der Prozess den schreibenden Zugriff auf die Datei 17 beendet, wird die Zugriffssteuerungseinheit 19 ebenfalls mit Hilfe von definierten eBPF-Programmen vom Betriebssystem-Kernel 22 informiert.

Die maximale Zugriffsdauer für eine Containerinstanz 13 kann entweder global für die Datei 17 oder für jede Eigenschaft in der Zugriffskennung definiert werden. Die Zugriffssteuerungseinheit 19 überwacht die in der Zugriffsrichtlinie 20 hinterlegte maximale Zugriffsdauer. Wird die jeweilige maximale Zugriffdauer überschritten, kann der Zugriff gestattet bleiben, sofern keine weitere Zugriffsanfrage für die Datei vorhanden ist. Handelt es sich um eine Zugriffsanfrage auf eine Gerätedatei, dann kann ein längerer Zugriff gestattet werden, wenn für die mit der Gerätedatei adressierte HW-Ressource keine weitere Ressourcenanforderung vorhanden ist. Sind weitere Zugriffsanfragen für die Datei 17 vorhanden, kann die Zugriffssteuerungseinheit 19 die zugehörige Containerinstanz 13 informieren den Zugriff sofort freizugeben und/oder direkt den Prozess, welcher die Gerätedatei über die erlaubte Zeitdauer hinaus beansprucht, beenden. Dies kann beispielsweise mit Hilfe entsprechender Interprozesskommunikationsmechanismen im Betriebssystem erfolgen.

Sofern ein paralleler schreibender Zugriff auf die Gerätedatei möglich ist, kann statt der Beendigung des Prozesses dieser nur erneut schlafen gelegt werden. Dies ist möglich, da angenommen wird, dass bei paralleler Benutzung der Datei 17 keine Serialisierung der Zugriffe durchgeführt werden muss, sondern lediglich höherpriorisierten Containerinstanz en, beispielsweise Containerinstanz 14 vorrangig Zugriff auf die Datei gegeben werden muss. Ist die Datei 17 belegt und möchte ein neuer Prozess auf diese zugreifen, überprüft die Zugriffssteuerungseinheit 19 dessen Priorität und ordnet ihn in eine für seine Priorität erzeugte Prozesswarteschlange 21 zu. Die Prozesswarteschlange 21 wird über ein Prozessscheduling im Kernel 22 gemäß ihrer Priorität abgearbeitet. Sobald der Zugriff auf die Datei 17 möglich ist, beendet die Überwachungskomponente in der Zugriffssteuerungseinheit 18 über die eBPF-Schnittstelle den Schlafzustand des Prozesses und führt diesen wie oben beschrieben aus.

In einer erweiterten Variante ist es zudem möglich, dass die Zugriffsrichtlinie 20, 30 zusätzlich einzelne Prozessnamen umfasst. Bei dieser Variante ist es möglich, die Zugriffsberechtigung bzw. das beschriebene Verfahren auch auf nichtcontainerisierte Prozesse auszuweiten, dass diese ebenfalls unterschiedlich priorisiert werden können.

Über das Verfahren können nicht nur Schreibzugriffe auf Dateien priorisiert und serialisiert werden. Für Gerätedateien hat das Verfahren den Vorteil, dass die Zuweisung und Serialisierung des Gerätes außerhalb des Gerätetreibers in einer Ressourcenzuteilungskomponente erfolgt. Gerätespezifische Software kann in Containern hoch- und runterskaliert werden ohne dass eine gerätespezifische Ressourcensteuerungskomponente erforderlich ist. Nicht-containerspezifische Prozesse können in der erweiterten Variante ebenfalls priorisiert werden. Sofern über die Gerätedateien z.B. Layer-2-Protokollinformationen auf einen Systembus geschrieben werden, können auf dem Laufzeitsystem einzelne, systemkritische Container aufgrund ihres Labels, ihrer Container-Netzwerktechnologie oder des Imagenamens priorisiert Steuerungskommandos abgeben.

Alle Verfahrensschritte können durch die entsprechende Vorrichtung implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Priorisieren eines Zugriffs von einer Containerinstanz (13) auf eine Datei (17) in einer Dateisystemressource, umfassend
- Empfangen (S1), in einer Laufzeitumgebung (12) der Containerinstanz, einer Zugriffsanfrage (R1) für den Zugriff von der Containerinstanz (13) auf die Datei (17), wobei die Zugriffsanfrage (R1) eine Zugriffskennung (L1) enthält, die mindestens eine Eigenschaft der zugreifenden Containerinstanz (13) kennzeichnet,
- Überprüfen (S2) der mindestens einen Eigenschaft in der Zugriffskennung (L1) gegenüber einer Zugriffsrichtlinie (20, 30), die eine Priorisierungsstufe für den Zugriff auf mindestens die eine Datei (17) abhängig von den Eigenschaften der Zugriffskennung (L1) umfasst, durch eine Zugriffssteuereinheit (19) in der Containerlaufzeitumgebung (12), und
- Zuweisen (S3) einer Zugriffsberechtigung mit einer Priorisierungsstufe zur Zugriffsanfrage (R1) abhängig von dem Überprüfungsergebnis,
- Weiterleiten (S4) der Zugriffsanfrage (R1) an die Datei (17) abhängig von der zugewiesenen Priorisierungsstufe.

2. Verfahren nach Anspruch 1, wobei die Datei (17) eine Gerätedatei ist, die Steuerungsbefehle von der Containerinstanz (13) empfängt und diese an eine von der Containerinstanz (13) steuerbare Hardware-Ressource (11) zur Ausführung weitergibt.

3. Verfahren nach Anspruch 2, wobei die Zugriffskennung (L1) spezifisch für die Containerinstanz (13) erstellt wird, oder die Zugriffkennung (L1) spezifisch für das Containerimage erstellt wird und die Containerimage-spezifische Zugriffskennung jeder aus dem Containerimage erzeugten Containerinstanz zugeordnet wird.

4. Verfahren nach Anspruch 2 oder 3, wobei die Priorisierungsstufen für den Zugriff der Containerinstanz (13) auf die Hardware-Ressource (11) durch einen Betreiber der Hardware-Ressource (11) vorgegeben werden.

5. Verfahren nach einem der vorangehenden Ansprüche, wobei die Eigenschaft in der Zugriffskennung (L1) mindestens eines aus einer Auswahl aus: einem Namen der Zugriffskennung, einer Signatur der zugreifenden Containerinstanz, einer Signatur des Containerimages, aus dem die Containerinstanz (13) erzeugt wird, einem Namen des Containerimages ist.

6. Verfahren nach einem der vorangehenden Ansprüche, wobei wenn der Containerinstanz (13) mindestens eine Netzwerkschnittstelle zugeordnet ist, die Zugriffskennung (L1) eine Kennung für jede der mindestens einen zugeordneten Netzwerkschnittstellen enthält.

7. Verfahren nach Anspruch 6, wobei die Kennung der zugeordneten Netzwerkschnittstelle durch einen Betreiber der Containerlaufzeitumgebung (12) der Netzwerkschnittstelle zugeordnet wird.

8. Verfahren nach Anspruch 6 oder 7, wobei die Zugriffsrichtlinie (20, 30) eine Priorisierungsstufe für jede der Kennungen der Netzwerkschnittstellen umfasst.

9. Verfahren nach einem der vorangehenden Ansprüche, wobei diejenige Priorisierungsstufe, die der ersten in der Zugriffskennung (L1) enthalten Eigenschaft zugeordnet ist, der Zugriffsanfrage zugewiesen wird.

10. Verfahren nach einem der Ansprüche 1-8, wobei die höchste Priorisierungsstufe aus allen Prioritätsstufen, die den in der Zugriffskennung (L1) enthaltenen Eigenschaften zugeordnet sind, der Zugriffsanfrage (R1) zugewiesen wird.

11. Verfahren nach einem der vorangehenden Ansprüche, wobei die Zugriffsrichtlinie (20, 30) für jede der mindestens einen Datei (17) einen Namen der Datei (17) und mindestens eine Eigenschaft aus einer Auswahl der nachfolgenden Eigenschaften: einem Namen der Zugriffskennung, einer Signatur der Containerinstanz (13), einer Signatur des Containerimages, aus dem die zugreifenden Containerinstanz (13) erzeugt wird, ein Name des Containerimages oder eine Kennung für eine Netzwerkschnittstelle, umfasst, und mindestens einer der Eigenschaften aus der Auswahl eine Priorisierungsstufe zugeordnet ist.

12. Verfahren nach einem der vorangehenden Ansprüche, wobei die Zugriffsrichtlinie (20, 30) für jede der mindestens einen Datei (17) mindestens eine Angabe aus einer Auswahl aus: einen Prozessnamen zu einem über die Zugriffsanfrage angefragten Prozess, einem Zugriffsmodus, einer maximalen Zugriffsdauer, bevorzugt abhängig von den Eigenschaften der Zugriffskennung, umfasst.

13. Verfahren nach einem der vorangehenden Ansprüche, wobei die Zugriffssteuereinheit (19) als ein Erweiterungsmodul der Containerlaufzeitumgebung oder als eine von der Containerlaufzeit (12) getrennte eigenständige Einheit ausgebildet ist.

14. System (10) zum Priorisieren eines Zugriffs von einer Containerinstanz (13) auf eine Datei (17) in einer Dateisystemressource, umfassend eine Laufzeitumgebung (12) einer Containerinstanz (13), die derart ausgebildet ist
- eine Zugriffsanfrage (R1) für den Zugriff von der Containerinstanz (13) auf die Datei (17) zu empfangen, wobei die Zugriffsanfrage (R1) eine Zugriffskennung (L1) enthält, die mindestens eine Eigenschaft der zugreifende Containerinstanz (13) kennzeichnet,
- die mindestens eine Eigenschaft in der Zugriffskennung (L1) gegenüber einer Zugriffsrichtlinie (20, 30), die eine Priorisierungsstufe für den Zugriff auf mindestens die eine Datei (17) abhängig von den Eigenschaften der Zugriffskennung (L1) umfasst, durch eine Zugriffssteuereinheit (19) in der Containerlaufzeitumgebung (12) zu überprüfen, und
- eine Zugriffsberechtigung mit der Priorisierungsstufe zur Zugriffsanfrage (R1) abhängig von dem Überprüfungsergebnis zuzuweisen, und
- die Zugriffsanfrage (R1) abhängig von der zugewiesenen Priorisierungsstufe an die Datei (17) weiterzuleiten.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.

## Claims

1. Method for prioritizing access by a container instance (13) to a file (17) in a file system resource, comprising
- receiving (S1), in a runtime environment (12) of the container instance, an access request (R1) for the container instance (13) to access the file (17), wherein the access request (R1) contains an access identifier (L1) which indicates at least one property of the accessing container instance (13),
- checking (S2), by way of an access control unit (19) in the container runtime environment (12), the at least one property in the access identifier (L1) against an access guideline (20, 30) that comprises a prioritization level for accessing at least the one file (17) on the basis of the properties of the access identifier (L1), and
- assigning (S3) an access authorization with a prioritization level to the access request (R1) on the basis of the checking result,
- forwarding (S4) the access request (R1) to the file (17) on the basis of the assigned prioritization level.

2. Method according to Claim 1, wherein the file (17) is a device file which receives control instructions from the container instance (13) and forwards them for execution to a hardware resource (11) that can be controlled by the container instance (13).

3. Method according to Claim 2, wherein the access identifier (L1) is created specifically for the container instance (13), or the access identifier (L1) is created specifically for the container image and the container-image-specific access identifier is assigned to each container instance generated from the container image.

4. Method according to Claim 2 or 3, wherein the prioritization levels for accessing the hardware resource (11) by the container instance (13) are predefined by an operator of the hardware resource (11).

5. Method according to any one of the preceding claims, wherein the property in the access identifier (L1) is at least one from a selection of: a name of the access identifier, a signature of the accessing container instance, a signature of the container image, from which the container instance (13) is generated, a name of the container image.

6. Method according to any one of the preceding claims, wherein, if at least one network interface is assigned to the container instance (13), the access identifier (L1) contains an identifier for each of the at least one assigned network interfaces.

7. Method according to Claim 6, wherein the identifier of the assigned network interface is assigned to the network interface by an operator of the container runtime environment (12).

8. Method according to Claim 6 or 7, wherein the access guideline (20, 30) comprises a prioritization level for each of the identifiers of the network interfaces.

9. Method according to any one of the preceding claims, wherein that prioritization level which is assigned to the first property contained in the access identifier (L1) is assigned to the access request.

10. Method according to any one of Claims 1-8, wherein the highest prioritization level of all prioritization levels assigned to the properties contained in the access identifier (L1) is assigned to the access request (R1).

11. Method according to any one of the preceding claims, wherein the access guideline (20, 30) comprises, for each of the at least one file (17), a name of the file (17) and at least one property from a selection of the following properties: a name of the access identifier, a signature of the container instance (13), a signature of the container image, from which the accessing container instance (13) is generated, a name of the container image or an identifier for a network interface, and a prioritization level is assigned to at least one of the properties from the selection.

12. Method according to any one of the preceding claims, wherein the access guideline (20, 30) comprises, for each of the at least one file (17), at least one detail from a selection of: a process name for a process requested via the access request, an access mode, a maximum access duration, preferably on the basis of the properties of the access identifier.

13. Method according to any one of the preceding claims, wherein the access control unit (19) is in the form of an expansion module of the container runtime environment or in the form of an independent unit that is separate from the container runtime (12).

14. System (10) for prioritizing access by a container instance (13) to a file (17) in a file system resource, comprising a runtime environment (12) of a container instance (13), which is designed
- to receive an access request (R1) for the container instance (13) to access the file (17), wherein the access request (R1) contains an access identifier (L1) which indicates at least one property of the accessing container instance (13),
- to check, by way of an access control unit (19) in the container runtime environment (12), the at least one property in the access identifier (L1) against an access guideline (20, 30) that comprises a prioritization level for accessing at least the one file (17) on the basis of the properties of the access identifier (L1), and
- to assign an access authorization with the prioritization level to the access request (R1) on the basis of the checking result, and
- to forward the access request (R1) to the file (17) on the basis of the assigned prioritization level.

15. Computer program product comprising a non-volatile computer-readable medium which can be loaded directly into a memory of a digital computer, comprising program code parts which, when the program code parts are executed by the digital computer, cause the latter to carry out the steps of the method according to any one of Claims 1 to 13.

## Revendications

1. Procédé de priorité d'un accès d'une instance de conteneur (13) à un fichier (17) dans une ressource de système de fichiers, comprenant
- la réception (S1), dans un environnement d'exécution (12) de l'instance de conteneur, d'une demande d'accès (R1) pour l'accès de l'instance de conteneur (13) au fichier (17), la demande d'accès (R1) contenant un identificateur d'accès (L1) qui caractérise au moins une propriété de l'instance de conteneur (13) qui accède,
- la vérification (S2) de ladite au moins une propriété dans ledit identifiant d'accès (L1) par rapport à une politique d'accès (20, 30) comprenant un niveau de priorité pour l'accès audit au moins un fichier (17) en fonction des propriétés dudit identifiant d'accès (L1), par une unité de commande d'accès (19) dans ledit environnement d'exécution de conteneur (12), et
- l'attribution (S3) d'une autorisation d'accès avec un niveau de priorité à la demande d'accès (R1) en fonction du résultat de la vérification,
- la transmission (S4) de la demande d'accès (R1) au fichier (17) en fonction du niveau de priorité attribué.

2. Procédé selon la revendication 1, dans lequel le fichier (17) est un fichier de dispositif qui reçoit des instructions de contrôle de l'instance de conteneur (13) et qui les transmet à une ressource matérielle (11) contrôlable par l'instance de conteneur (13) pour exécution.

3. Procédé selon la revendication 2, dans lequel l'identifiant d'accès (L1) est créé spécifiquement pour l'instance de conteneur (13), ou l'identifiant d'accès (L1) est créé spécifiquement pour l'image de conteneur et l'identifiant d'accès spécifique à l'image de conteneur est associé à chaque instance de conteneur générée à partir de l'image de conteneur.

4. Procédé selon la revendication 2 ou 3, dans lequel les niveaux de priorité pour l'accès de l'instance de conteneur (13) à la ressource matérielle (11) sont prédéfinis par un exploitant de la ressource matérielle (11).

5. Procédé selon l'une des revendications précédentes, dans lequel la propriété dans l'identifiant d'accès (L1) est au moins l'une d'une sélection parmi : un nom de l'identifiant d'accès, une signature de l'instance de conteneur accédant, une signature de l'image de conteneur à partir de laquelle l'instance de conteneur (13) est générée, un nom de l'image de conteneur.

6. Procédé selon l'une quelconque des revendications précédentes, dans lequel, si au moins une interface réseau est associée à l'instance de conteneur (13), l'identifiant d'accès (L1) comprend un identifiant pour chacune des au moins une interface réseau associée.

7. Procédé selon la revendication 6, dans lequel l'identifiant de l'interface réseau attribuée est attribué à l'interface réseau par un opérateur de l'environnement d'exécution de conteneur (12).

8. Procédé selon la revendication 6 ou 7, dans lequel la politique d'accès (20, 30) comprend un niveau de priorité pour chacun des identifiants des interfaces réseau.

9. Procédé selon l'une quelconque des revendications précédentes, dans lequel le niveau de priorité associé à la première propriété contenue dans l'identifiant d'accès (L1) est attribué à la demande d'accès.

10. Procédé selon l'une quelconque des revendications 1 à 8, dans lequel le niveau de priorité le plus élevé parmi tous les niveaux de priorité associés aux propriétés contenues dans l'identifiant d'accès (L1) est attribué à la demande d'accès (R1).

11. Procédé selon l'une quelconque des revendications précédentes, dans lequel la politique d'accès (20, 30) comprend, pour chacun des au moins un fichier (17), un nom du fichier (17) et au moins une propriété parmi une sélection des propriétés suivantes : un nom de l'identifiant d'accès, une signature de l'instance de conteneur (13), une signature de l'image de conteneur à partir de laquelle l'instance de conteneur (13) accédant est générée, un nom de l'image de conteneur ou un identifiant pour une interface de réseau, et au moins l'une des propriétés parmi la sélection est associée à un niveau de priorité.

12. Procédé selon l'une quelconque des revendications précédentes, dans lequel la politique d'accès (20, 30) comprend, pour chacun des au moins un fichier (17), au moins une indication parmi une sélection de : un nom de processus associé à un processus requis via la demande d'accès, un mode d'accès, une durée maximale d'accès, de préférence en fonction des caractéristiques de l'identifiant d'accès.

13. Procédé selon l'une des revendications précédentes, dans lequel l'unité de commande d'accès (19) est conçue comme un module d'extension de l'environnement d'exécution du conteneur ou comme une unité autonome séparée de l'environnement d'exécution du conteneur (12).

14. Système (10) pour donner la priorité à un accès d'une instance de conteneur (13) à un fichier (17) dans une ressource de système de fichiers, comprenant un environnement d'exécution (12) d'une instance de conteneur (13), qui est conçu afin de
- recevoir une demande d'accès (R1) pour accéder au fichier (17) à partir de l'instance de conteneur (13), la demande d'accès (R1) contenant un identifiant d'accès (L1) qui identifie au moins une propriété de l'instance de conteneur (13) accédant,
- vérifier la au moins une propriété dans l'identifiant d'accès (L1) par rapport à une politique d'accès (20, 30) comprenant un niveau de priorité pour l'accès au au moins un fichier (17) en fonction des propriétés de l'identifiant d'accès (L1), par une unité de commande d'accès (19) dans l'environnement d'exécution de conteneur (12), et
- d'attribuer une autorisation d'accès avec le niveau de priorité à la demande d'accès (R1) en fonction du résultat de la vérification, et
- de transmettre la demande d'accès (R1) au fichier (17) en fonction du niveau de priorité attribué.

15. Produit de programme informatique comprenant un support lisible par ordinateur non volatil, chargeable directement dans une mémoire d'un ordinateur numérique, comprenant des parties de code de programme qui, lorsque les parties de code de programme sont exécutées par l'ordinateur numérique, amènent ce dernier à exécuter les étapes du procédé selon l'une quelconque des revendications 1 à 13.
